# EUROPEAN PATENT APPLICATION

(11) **EP 3 748 286 A1**
(43) Date of publication of application: **09.12.2020**
(21) Application number: 19177895.0
(22) Date of filing: 03.06.2019
(51) Int. Cl.: G01B 11/24, G01B 21/04, G01B 5/00

(54) **AN IMAGING APPARATUS AND A METHOD FOR OPERATING AN IMAGING APPARATUS**

(71) Applicant: Carl Zeiss Industrielle Messtechnik GmbH, 73447 Oberkochen (DE)
(72) Inventor: KRASZEWSKI, Maciej, 76-200 Slupsk (PL); WÔJCIK, Adrian, 88 -220 Osieciny (PL)
(74) Representative: Ramrath, Lukas

(57) **Abstract**

The invention relates to an imaging apparatus for measuring of an object and a method for operating such an imaging apparatus, wherein the imaging apparatus (1) comprises at least two imaging devices, a support structure (7) and an apparatus housing (8), wherein the imaging devices are mounted to the support structure (7) by at least one mounting means, wherein the support structure (7) with the imaging devices is arranged within an inner volume of the apparatus housing (8), wherein the imaging apparatus (1) further comprises at least one device (9) for adjusting the temperature of the support structure (7) and/or at least one device (15) for adjusting the temperature of the mounting means (16).

## Description

The invention relates to an imaging apparatus for measuring of an object and a method for operating such an imaging apparatus.

Generally known our machine vision measurement systems that use image analysis for a geometrical measurement of a measuring object. These systems require a calibration of the cameras used by the systems. Such calibration e.g. includes the determination of optical parameters of each camera which can also be referred to as intrinsic parameters. Set determination can also be denoted as intrinsic calibration point further, the determination of a relative position and orientation between the cameras of such a system is required. This can also be denoted as extrinsic calibration used for the determination of extrinsic parameters.

Due to changes of the temperature, the temperature of the camera and also the optical (intrinsic) parameters of the camera change. This is an undesirable effect because the aforementioned intrinsic calibration is no longer valid. This, in turn, can result in a deterioration of the accuracy of the image-based measurement which is based the intrinsic parameters provided by the calibration. The same effect holds for the extrinsic calibration. Do to temperature changes, the material of a support structure to which the cameras of the system are mounted can expand or contract or deform in any other way. In this case, the aforementioned extrinsic calibration is no longer valid. This also results in a deterioration of the accuracy of the image-based measurement which is also based on the extrinsic parameters provided by the calibration.

The EP 1 570 314 B1 discloses a device for positioning camera modules for taking images from a flying apparatus.

There is the technical problem of providing an imaging apparatus for measuring of an object and a method for operating such an imaging apparatus which provide an improved accuracy of the image-based measurements based on images acquired by at least one camera of said imaging apparatus.

The solution to said technical problem is provided by the subject-matter with the features of the independent claims point further advantages embodiments are provided by the subject-matter with the features of the sub claims.

An imaging apparatus for measuring of an object is proposed. The imaging apparatus can provide a coordinate measuring device or can be a part thereof. Images generated by the imaging apparatus can be used to determine features of a measuring object, in particular dimensional features. Dimensional features can e.g. be size-related features such as a length, a width or a height or other size-related features. Further, dimensional features can be distance-related features such as a distance between two edges or holes or other distance-related features. These features can be determined by image processing methods which are known to the skilled person. The proposed imaging apparatus can be used for an application in industrial metrology, in particular for a quality control of an object.

The imaging apparatus comprises at least two imaging devices. An imaging device can e.g. be a camera or comprises a camera. In particular, a camera can be a CCD-camera or a CMOS-camera. An imaging device can be used to generate an image, in particular a two dimensional image. The image can be a colored image or a grayscale image.

The imaging apparatus can comprises exactly 2 imaging devices. In this case, the imaging apparatus can also be referred to as stereoscopic imaging apparatus. It is, however, possible that the imaging apparatus comprises more than two imaging devices.

Further, the imaging apparatus comprises a support structure, wherein the imaging devices are mounted to the support structure by at least one mounting means. The material of the support structure is preferably a material with a low thermal expansion coefficient, for example carbon fiber. It is, however possible, to use other materials such as aluminium, steel or a steel alloy. The imaging devices are mounted to different portions or sections of the support structure. In particular, the imaging devices are mounted such that the relative position and orientation between the imaging device and the support structure is fixed. Consequently, a relative position and orientation between the imaging devices mounted to the support structure is also fixed. The imaging device can be mounted to the support structure by any suitable means for providing the fixed connection, e.g. by screwing, clamping, gluing, welding or any other connection method. Thus, a mounting means can denote any element used for providing the connection between the imaging device and the support structure, for example a screw, a clamp, a bracket, a plate, in particular a plate with one or multiple threads, a thread hole, a through hole, a nut, a latching element, a clamping element, an adhesive element or layer for providing a gluing connection etc.. Moreover, it is possible that each of the imaging device and the support structure have elements for providing the connection, in particular interacting elements for providing a force-fit and/or a form-fit and/or a bonded connection. The mounting means can be made of material which is different from the material of the support structure. The mounting means can e.g. be made of aluminium, steel, steel alloy or plastics, e.g. a polymer material.

Preferably, an image device housing, i.e. a camera housing, is mounted to the support structure by the at least one mounting means.

Moreover, the imaging devices can be mounted to the support structure such that a predetermined relative position and orientation for generating images for the aforementioned measurement purposes can be generated by the imaging devices. In particular, and orientation of the imaging devices in a reference coordinate system can be different from one another. An imaging device and the support structure can have connecting portions or sections for providing the aforementioned connection.

Further, the imaging apparatus comprises an apparatus housing. The housing can comprise wall elements, wherein these wall elements can enclose an inner volume. The support structure with the imaging devices is arranged within an inner volume of the apparatus housing. The apparatus housing can have transparent or semitransparent sections for letting pass light rays for imaging purposes. The apparatus housing can be provided by a box, in particular rectangular -shaped box. The apparatus housing can also be denoted as apparatus case or casing. A material of the housing can be made of plastic, in particular a polymer material. It is also possible that the material of the housing is a metal, in particular aluminium.

The support structure can be attached to the housing, e.g. by the connecting element, in particular to an inner surface of a wall element of said housing. The connecting element can be part of the support structure. Preferably, the connecting element is not part of the support structure. In particular, the connecting element can be configured and/or arranged such that the formation of the connecting element, in particular a temperature-based information, does not change the relative position and orientation between the imaging devices of the imaging apparatus.

According to the invention, the imaging apparatus further comprises at least one device for adjusting the temperature of the support structure. The device for adjusting the temperature of the support structure (the temperature adjustment device) is configured and/or arranged such that the temperature of the support structure can be adjusted, in particular such that the temperature of all portions or sections of the support structure can be adjusted simultaneously and to the same temperature value. In particular, the temperature adjustment device is configured and/or arranged such that the thermal conductivity of the thermal connection between the temperature adjustment device and the support structure can be higher than the thermal conductivity of the thermal connection between the temperature adjustment device and one or each of the imaging devices. Consequently, the temperature adjustment device can be configured and/or arranged such that the temperature of the support structure can be adjusted by operating the temperature adjustment device whereas the temperature of one or each of the imaging devices cannot be adjusted by operating the temperature adjustment device. Moreover, the temperature adjustment device can be configured and/or arranged such that predetermined amount of energy for operating the temperature adjustment device results in a higher temperature change of the support structure then of one or each of the imaging devices.

By operating the device for adjusting the temperature of the support structure, said support structure can be heated. Alternatively or in addition, the support structure can be cooled.

Alternatively or in addition, the imaging apparatus further comprises at least one device for adjusting the temperature of the at least one mounting means. The device for adjusting the temperature of the mounting means is configured and/or arranged such that the temperature of the mounting means can be adjusted, in particular such that the temperature of all portions or sections of the mounting means or that a mounting interface between the support structure and the imaging device can be adjusted simultaneously and to the same temperature value. In particular, the temperature adjustment device is configured and/or arranged such that the thermal conductivity of the thermal connection between the temperature adjustment device and the mounting means can be higher than the thermal conductivity of the thermal connection between said temperature adjustment device and one or each of the imaging devices and/or between said temperature adjustment device and the support structure. Consequently, the temperature adjustment device can be configured and/or arranged such that the temperature of the at least mounting means can be adjusted by operating the temperature adjustment device. Moreover, the temperature adjustment device can be configured and/or arranged such that predetermined amount of energy for operating the temperature adjustment device results in a higher temperature change of the mounting then of one or each of the imaging devices or of the support structure. By operating the device for adjusting the temperature of the mounting means, said mounting means can be heated. Alternatively or in addition, the mounting means can be cooled.

The device for adjusting the temperature of the support structure and the device for adjusting the temperature of the mounting means can be designed as separate devices. It is, however, also possible that the device for adjusting the temperature of the support structure provides the device for adjusting the temperature of the mounting means or vice versa.

A temperature adjustment device can e.g. be designed as a heater, in particular as the heating foil. The heating foil can e.g. be a flexible foil. A heating foil can e.g. comprise at least one wire, e.g. a microwire, wherein thermal energy is generated if a current is applied to the wire. The wire can e.g. be printed on the heating foil.

The imaging apparatus can comprises exactly one device for adjusting the temperature of the support structure or more than one device, for example two devices, for adjusting the temperature. Multiple devices for adjusting the temperature can be configured and/or arranged such that the aforementioned simultaneous adjustment of the temperature of all portions or sections of the support structure is provided. Correspondingly, the imaging apparatus can comprises exactly one device for adjusting the temperature of the mounting means or more than one device, for example two devices, for adjusting the temperature.

By providing the at least one temperature adjustment device, the temperature of the support structure and/or of the mounting means can reliably and quickly be adjusted to the desired or predetermined set value.

In particular, the temperature of the support structure and/or of the mounting means can be reliably and quickly held constant at the desired or predetermined set value. This results in no or only minimal deformation of the support structure and/or the connection between the support structure and an imaging device and consequently in no or only minimal changes of the aforementioned extrinsic parameters which are used to perform the image processing for the determination of the object features. As a consequence, the reliability and the accuracy of image-based measurements provided by the proposed imaging apparatus can be improved.

It is also possible that multiple temperature-specific sets of extrinsic parameters are known, e.g. by performing a calibration for different temperatures. By operating the at least one temperature adjustment device, the temperature of the support structure and/or the mounting means can be reliably and quickly adjusted to one of these different temperature values and then, the corresponding set of extrinsic parameters can be used for the determination of the object features. This allows a reliable and accurate determination of features at different temperatures.

In a further embodiment, the at least one device for adjusting the temperature of the support structure is mounted on the support structure and/or or on the mounting means. This can mean that the temperature adjustment device is directly installed or attached to the support structure and/or to the mounting means. In particular, a section or surface of the temperature adjustment device through which thermal energy (for heating or cooling) is conducted can directly abut the surface of the support structure and/or the mounting means. If the temperature adjustment device is provided by a heating foil, the foil can be attached or applied to the support structure or sections thereof. More particular, the heating foil can be wrapped around the support structure or sections thereof. It is e.g. possible that different heating foils are wrapped around different sections of the support structure. Further, the foil can be attached or applied to the mounting means or sections thereof. More particular, the heating foil can be wrapped around the complete mounting means or sections thereof. It is e.g. possible that different heating foils are wrapped around different sections of the mounting means.

Alternatively or in addition, the at least one device for adjusting the temperature of the mounting means is mounted on the imaging device, in particular on an image device housing, and/or on the support structure. In particular, the temperature adjustment device can be mounted on or applied to an outer surface of the image device housing and/or on/to an image device connecting section of the support structure. In this case and also in the case that the temperature adjusting device is not directly mounted on the mounting means, it can be possible that the temperature adjusting device is thermally connected to the mounting means, e.g. by a thermal connection element with a thermal conductivity higher than air. In particular, the temperature adjustment device can be mounted or be applied such that the mounting means is fully or at least partially covered or framed or surrounded by the temperature adjustment device. It is further possible that the temperature adjustment device is wrapped around the image device housing and/or the support structure, in particular if the temperature adjustment device is provided as a heating foil.

This advantageously allows a quick and reliable transfer of thermal energy to or from the support structure and/or to or from the mounting means and consequently a quick and reliable adjustment of the support structure temperature and/or the mounting means temperature to the predetermined set value.

In another embodiment, the device for adjusting the temperature of the support structure is thermally connected to the support structure by a thermal connection with a thermal conductivity higher than the thermal conductivity of air. It is e.g. possible to connect the temperature adjustment device to the support structure via the thermal energy conducting element. Such an element can e.g. be a metallic element. It is e.g. also possible that the thermal energy conducting element is provided by or comprises the heat conducting paste. The thermal energy conducting element can also provide the connecting element for mounting the temperature adjustment device to the support structure. If the thermal energy conducting element is provided by the heat conducting paste, this paste can also have adhesive characteristics.

Alternatively or in addition the device for adjusting the temperature of the mounting means is thermally connected to the mounting means by a thermal connection with a thermal conductivity higher than the thermal conductivity of air. The same aspects as for the thermal connection between support structure temperature adjustment device and the support structure can apply to the thermal connection between mounting means temperature adjustment device and the mounting means.

This advantageously allows a quick and reliable transfer of thermal energy to or from the support structure and/or the mounting means and consequently a quick and reliable adjustment of the support structure temperature and/or the mounting means temperature to the predetermined set value.

In a further embodiment, the imaging apparatus further comprises at least one temperature sensor for sensing the temperature of the support structure (support structure temperature sensor). Alternatively or in addition, the imaging apparatus comprises at least one temperature sensor for sensing the temperature of the mounting means (mounting means temperature sensor).It is possible that the imaging apparatus comprises exactly one temperature sensor or more than one temperature sensor. The temperature sensor(s) for sensing a temperature of the support structure and the temperature sensor(s) for sensing a temperature of the mounting means can be designed as different sensors. It is, however, also possible that a temperature sensor for sensing a temperature of the support structure provides a temperature sensor for sensing a temperature of the mounting means and vice versa.

The temperature sensor(s) can be configured and/or arranged such that the temperature of all portions or sections of the support structure and/or of the mounting means can be sensed simultaneously or such that set temperature can be reliably determined based on the temperature sensed.

By sensing the temperature of the support structure and/or of the mounting means, it is advantageously possible to improve the adjustment of the support structure temperature and/or of the mounting means temperature to a predetermined (desired) set value, e.g. to a constant value. It is e.g. possible to compare the sensed (actual) temperature to said set value, e.g. by an evaluation and control unit, and then operate or control the temperature adjustment device such that a deviation between the temperatures is reduced, in particular to zero or a predetermined small value. It is further possible to determine a temperature change of the actual temperature and to operate or control the temperature adjustment device such that the temperature changes compensated and the temperature of the support structure and/or of the mounting means is held constant.

The temperature can be any temperature sensor known to the skilled person. The temperature sensor can e.g. be a semiconductor-based temperature sensor. Other kinds of temperature sensors can also be used for the desired temperature sensing. In a further embodiment, the support structure temperature sensor is mounted on the support structure. Alternatively or in addition, the mounting means temperature is mounted on the mounting means. This can mean that the temperature sensor is directly installed or attached to the support structure or the mounting means. In particular, a section or surface of the temperature sensor through which the temperature is sensed can directly abut the surface of the support structure or the mounting means. This advantageously allows a quick and reliable sensing of the temperature of the support structure and/or the mounting means and consequently a quick and reliable adjustment of the support structure temperature to the predetermined set value.

In a further embodiment, the support structure temperature sensor is thermally connected to the support structure by a thermal connection with a thermal conductivity higher than the thermal conductivity of air and/or the mounting means temperature sensor is thermally connected to the mounting means by a thermal connection with a thermal conductivity higher than the thermal conductivity of air. It is e.g. possible to connect the temperature sensor to the support structure or the mounting means via a thermal energy conducting element. As outlined before, such an element can e.g. be a metallic element. It is e.g. also possible that the thermal energy conducting element is provided by or comprises the heat conducting paste. The thermal energy conducting element can also provide the connecting element for mounting the temperature sensor to the support structure or the mounting means. A heat conducting paste can also have adhesive characteristics. This advantageously allows a quick and reliable sensing of the temperature of the support structure or mounting means and consequently a quick and reliable adjustment of the support structure temperature to the predetermined set value.

In a further embodiment, the imaging device comprises an imaging device housing and an image capturing unit, wherein the image capturing unit is arranged within an inner volume of the imaging device housing, wherein the imaging device further comprises at least one device for adjusting the temperature of the imaging device, in particular the image capturing unit. The image capturing unit can be provided or comprises the aforementioned camera, in particular the CCD or CMOS-camera. Further, the image capturing unit can have light ray conducting or forming elements such as a lens. It is, however, also possible that the image device housing has such elements. In particular, at least one section or portion of the imaging device housing can provide or comprise a lens. The imaging device housing can comprise wall elements, wherein these wall elements can enclose the inner volume. The imaging device housing can have transparent or semitransparent sections for letting pass light rays for imaging purposes. The imaging device housing can be provided by a box, in particular rectangular -shaped box. The apparatus housing can also be denoted as imaging device case or casing. A material of the housing can e.g. be aluminium. It is, however, possible to use other materials.

The device for adjusting the temperature of the imaging device is configured and/or arranged such that the temperature of the imaging device, in particular of the image capturing unit, can be adjusted, in particular such that the temperature of all portions or sections of the image capturing unit can be adjusted simultaneously and to the same temperature value. In particular, the temperature adjustment device is configured and/or arranged such that the thermal conductivity of the thermal connection between the temperature adjustment device and the image capturing unit can be higher than the thermal conductivity of the thermal connection between the temperature adjustment device and the support structure. Consequently, the temperature adjustment device can be configured and/or arranged such that the temperature of the imaging device can be adjusted by operating the temperature adjustment device whereas the temperature of the support cannot be adjusted by operating said temperature adjustment device. Moreover, the temperature adjustment device can be configured and/or arranged such that predetermined amount of energy for operating the temperature adjustment device results in a higher temperature change of the image capturing unit then of the support structure.

By operating the device for adjusting the temperature of the imaging device, said image capturing unit can be heated. Alternatively or in addition, the image capturing unit can be cooled.

The temperature adjustment device can e.g. be designed as a heater, in particular as the heating foil. The heating foil can e.g. be a flexible foil. If the temperature adjustment device is provided by a heating foil, the foil can be attached or applied to the imaging device or sections thereof, in particular to a surface, e.g. an inner or an outer surface, of wall elements of the image device housing. More particular, the heating foil can be wrapped around the imaging device, in particular around its housing. It is e.g. possible that different heating foils are wrapped around different sections of the imaging device. The device for adjusting the temperature of the imaging device and the device for adjusting the temperature of the mounting means can be designed as separate devices or elements. It is, however, also possible that the device for adjusting the temperature of the imaging device provides the device for adjusting the temperature of the mounting means or vice versa.

The imaging device can comprises exactly one device for adjusting the temperature or more than one device, for example two devices, for adjusting the temperature. Multiple devices for adjusting the temperature can be configured and/or arranged such that the aforementioned simultaneous adjustment of the temperature of all portions or sections of the image capturing unit is provided.

By providing the at least one temperature adjustment device, the temperature of the imaging device, in particular of the image capturing unit of said device, can reliably and quickly be adjusted to the desired or predetermined set value.

In particular, the temperature of the imaging device can be reliably and quickly held constant at the desired or predetermined set value. This results in no or only minimal changes of the aforementioned intrinsic parameters which are used to perform the image processing for the determination of the object features. As a consequence, the reliability and the accuracy of image-based measurements provided by the proposed imaging apparatus can be improved.

It is also possible that multiple temperature-specific sets of intrinsic parameters are known, e.g. by performing a calibration for different temperatures. By operating the at least one temperature adjustment device, the temperature of the imaging device can be reliably and quickly adjusted to one of these different temperature values and then, the corresponding set of intrinsic parameters can be used for the determination of the object features. This allows a reliable and accurate determination of features at different temperatures.

In a further embodiment, the imaging device further comprises at least one temperature sensor for sensing the temperature of the imaging device, in particular of the temperature of the image capturing unit.

It is possible that the imaging apparatus comprises exactly one temperature sensor or more than one temperature sensor. The temperature sensor(s) can be configured and/or arranged such that the temperature of all portions or sections of the image capturing unit can be sensed simultaneously or such that set temperature can be reliably determined based on the temperature sensed.

By sensing the temperature of the imaging device, it is advantageously possible to improve the adjustment of the image device temperature to a predetermined (desired) set value, e.g. to a constant value. It is e.g. possible to compare the sensed (actual) temperature to said set value, e.g. by an evaluation and control unit, and then operate or control the temperature adjustment device such that a deviation between the temperatures is reduced, in particular to zero or a predetermined small value. It is further possible to determine a temperature change of the actual temperature and to operate or control the temperature adjustment device such that the temperature changes compensated and the temperature of the imaging device, in particular of the image capturing unit of said device, is held constant.

The temperature can be any temperature sensor known to the skilled person. For example, the temperature sensor can be a semiconductor-based temperature sensor. Other kinds of temperature sensors can also be used, however.

Further, the temperature sensor is mounted to the image capturing unit or to the image device housing. This can mean that the temperature sensor is directly installed or attached to the image capturing unit or to a part of the housing, in particular a wall element. In particular, a section or surface of the temperature sensor through which the temperature is sensed can directly abut the surface of the image capturing unit or the housing. This advantageously allows a quick and reliable sensing of the temperature of the support structure and consequently a quick and reliable adjustment of the support structure temperature to the predetermined set value.

Further, the temperature sensor can also be thermally connected to the image capturing unit or to the image device housing by a thermal connection with a thermal conductivity higher than the thermal conductivity of air. It is e.g. possible to connect the temperature sensor to the image capturing unit via a thermal energy conducting element. As outlined before, such an element can e.g. be a metallic element or is provided by or comprises the heat conducting paste, e.g. with adhesive characteristics. The thermal energy conducting element can also provide the connecting element for mounting the temperature sensor to the image capturing unit or to the image device housing. This advantageously allows a quick and reliable sensing of the temperature of the imaging device and consequently a quick and reliable adjustment of the support structure temperature to the predetermined set value.

In a further embodiment, the imaging apparatus comprises at least one control unit for controlling an operation of the at least one device for adjusting the temperature of the support structure and/or for controlling an operation of the at least one device for adjusting the temperature of the mounting means and/or for controlling an operation of the at least one device for adjusting the temperature of the the imaging device. It is possible that different control units are provided for controlling the operation of the different elements. Preferably, however, a common control unit for controlling the operation of all different elements is provided.

The control unit can comprise or be provided by a microcontroller or an integrated circuit. The control unit can be connected to a temperature adjustment device by signal and/or data transmission means such as a cable or wire. It is, however, also possible that the control unit is wirelessly connected to a temperature adjustment device. The control unit can also be connected to a temperature sensor by signal and/or data transmission means which can provide a wired or a wireless connection.

This advantageously allows a simple and reliable operation of the imaging apparatus.

In a further embodiment, the support structure comprises an elongated element. It is also possible that the support structure is designed as an elongated element. An elongated element can denote an element with a length which is at least five times higher than a width and/or a height and/or a diameter of the elongated element. For example, the length of the elongated element can be higher than 0.5 m, 0.75 m or 1.0 m. Further, a diameter of the elongated element can be smaller than 50 mm, 40 mm or 30 mm.

The elongated element can e.g. be a pipe or a pipe-like element or a bar or a bar-like element. Further, the elongated element can be a hollow element. A material of the elongated element has been outlined before.

The imaging devices are mounted on the free ends of the elongated element. In other words, the imaging devices can be mounted to opposite ends of the elongated element. In this case, the support structure can have connect term interfaces at these opposite ends.

By designing the support structure as an elongated element or by providing an elongated element within the support structure, a large distance between the imaging devices can be provided which, in turn, leads to a high accuracy of the image-based determination of features.

In a further embodiment, the apparatus comprises at least one thermal insulation element for isolating the inner volume of the apparatus housing. A thermal insulation element can be provided by foil, a mesh or a plate or a coating or a foam, in particular a thermal insulator foam. The thermal insulation element can be attached to or applied to one or more outside surface(s) and/or to one or more inside surface(s) of the apparatus housing. In particular, the thermal insulation element can be configured and/or arranged such that a change of the temperature of an external environment of the apparatus housing does not result in a temperature change of the inner volume of the apparatus housing, more particular in a temperature change of the support structure or, alternatively, does not result in such a temperature change which is higher than a predetermined (small) value.

Providing such at least one thermal insulation element advantageously simplifies the adjustment of the temperature of the support structure, in particular to a constant value, since an impact of the temperature change of the external environment is reduced or even eliminated.

It is further possible that each imaging device comprises at least one of thermal insulation element for isolating the inner volume of the image device housing. As outlined before with respect to the apparatus housing, the thermal insulation element can be attached to or applied to one or more outside surface(s) and/or to one or more inside surface(s) of the image device housing. In particular, the thermal insulation element can be configured and/or arranged such that a change of the temperature of an external environment of the image device housing, e.g. of the inner volume of the apparatus housing, does not result in a temperature change of the inner volume of the image device housing, more particular in a temperature change of the image capturing unit or, alternatively, does not result in such a temperature change which is higher than a predetermined (small) value. Providing such at least one thermal insulation element advantageously simplifies the adjustment of the temperature of the imaging device, in particular to a constant value, since an impact of the temperature change of the external environment, e.g. of the inner volume of the apparatus housing, is reduced or even eliminated.

In a further embodiment, the imaging apparatus has at least one mounting interface for mounting the apparatus to a positioning device. The positioning device can be a device for adjusting the position and/or and orientation of the imaging apparatus. The position and/or orientation can be related to a reference coordinate system, and particular the world coordinate system. It is in particular possible that the imaging apparatus (and thus the image capturing units of the imaging apparatus) are moved around the measuring object by the positioning device, in particular along the predetermined measurement trajectory. During set movement, images can be generated from different perspectives which allows or simplifies the aforementioned determination of object features. The positioning device can e.g. be a robot, in particular an articulated robot. However, the positioning device can also be a coordinate measuring apparatus with the portal design or with the moving column design.

The mounting interface can be configured and/or arranged such that a rigid connection between the imaging apparatus and the positioning device can be provided. The mounting interface can in particular be provided by the apparatus housing or can be attached to said housing. The connection can be a detachable connection.

Further described is a system for measuring an object comprising a positioning device according to one of the embodiments disclosed in this invention and an imaging apparatus according to one of the embodiments disclosed in this invention, wherein the imaging apparatus is mounted to the positioning device. Further, such a system can comprise an evaluation and control unit by which a movement of the imaging apparatus can be controlled and/or the image-based feature determination can be performed. In this case, the system can provide a coordinate measuring apparatus. As outlined before, such an evaluation and control unit can comprise or be provided by a microcontroller or an integrated circuit. Further, the imaging apparatus can have an interface for establishing a data connection and/or a signal connection to the imaging apparatus, in particular to one, selected or all elements of the imaging apparatus, in particular to the image capturing units.

Further proposed is the method for operating an imaging apparatus according to one of the embodiments disclosed in this invention. The method can be performed by such an imaging apparatus. Therefore, the imaging apparatus can be configured such that a method according to one of the embodiments disclosed in this invention can be performed by set imaging apparatus.

The method comprises the step of operating the at least one device for adjusting the temperature of the support structure such that the temperature of the support structure is adjusted to a predetermined value. Alternatively or in addition, the at least one device for adjusting the temperature of the mounting means is operated such that the temperature of the mounting means is adjusted to a predetermined value. The predetermined value can be of value for which the aforementioned extrinsic parameters are known. As outlined before, the predetermined value can also be chosen a one value of a predetermined set of multiple predetermined values to which predetermined extrinsic parameters are assigned. It is in particular possible that the predetermined value is chosen as the value of said set of multiples values for which a deviation between the temperature of an external environment and the support structure and/or the mounting means is minimal. In this case, it can be required to sense the temperature of the external environment. Therefore, the imaging apparatus can also have at least one temperature sensor for sensing the temperature of the external environment.

The method advantageously allows to reliably and quickly adjust the temperature of the support structure and/or the mounting means. Corresponding advantages have been outlined before.

The method can further comprise the step of operating the at least one device for adjusting the temperature of the imaging device such that the temperature of the imaging device, in particular of the image capturing unit of said device, is adjusted to a predetermined value, in particular to a constant value. It is possible that the temperature of different image capturing units are adjusted to the same or two different values. Adjusting the temperature of different image capturing units to different values advantageously allows to operate each image capturing unit at a temperature for which intrinsic parameters are known, e.g. by a calibration process performed at said temperature.

In a further embodiment, the at least one device for adjusting the temperature of the support structure is operated such that the temperature of the support structure remains constant and/or the at least one device for adjusting the temperature of the mounting means is operated such that the temperature of the support structure remains constant. Corresponding advantages have been outlined before.

In a further embodiment, the at least one device for adjusting the temperature of the support structure and/or the at least one device for adjusting the temperature of the support structure and the at least one device for adjusting the temperature of the imaging device are operated such that the temperature of the support structure and/or the mounting means and the temperature of the imaging device are adjusted to an equal value or to different values. In other words it is possible that the temperature of the support structure and/or the mounting means is adjusted to the same value as the temperature of one or all of the image capturing units. It is, however, also possible that the temperature of the support structure and/or the mounting means is adjusted to a value which is different from the temperature value to which the temperature of one or all image capturing unit(s) is adjusted. Preferably, the devices for adjusting the temperature of the support structure and the mounting means are operated such that the corresponding temperatures are adjusted to an equal value. It is, however, also possible to adjust said temperatures to different values.

Adjusting the temperature of the support structure and/or the mounting means to such a value different from the temperature of an image capturing unit advantageously allows to operate the imaging apparatus at different temperatures for which extrinsic and intrinsic parameters are known, e.g. by the aforementioned extrinsic and intrinsic calibration processes which can be performed at different temperatures.

Further described is a method for measuring an object by a system comprising a positioning device and an imaging apparatus mounted to set imaging device. This method can comprise the step of moving the imaging apparatus two different positions and/or different orientations, in particular along the predetermined trajectory. In each of said positions and/or said orientations, images can be generated by the image capturing units of the imaging apparatus. Further, these images can be processed in order to determine features of the measuring object, in particular dimensional features.

The invention will be described with reference to the following figures:
- Fig. 1: a schematic view of an imaging apparatus according to the invention,
- Fig. 2: a schematic block diagram of a positioning device with an imaging apparatus,
- Fig. 3: a schematic flow diagram of a method for operating an imaging apparatus according to the invention,
- Fig. 4: a schematic flow diagram of a method for operating an imaging apparatus according to another embodiment of the invention and
- Fig. 5: a schematic view of an imaging apparatus according to another embodiment of the invention.

In the following, the same reference denote elements with the same or a similar technical features.

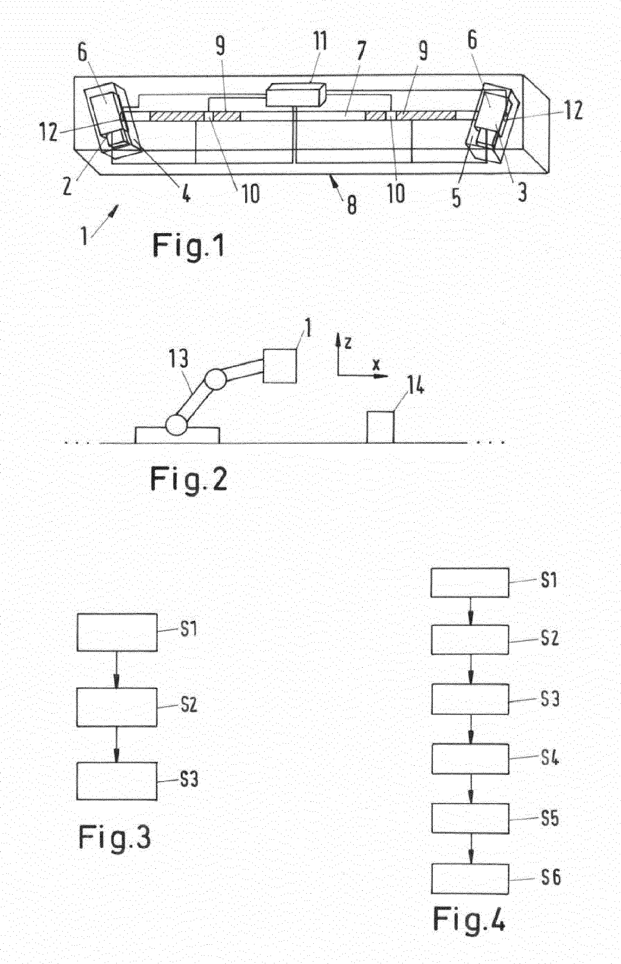

Figure 1 discloses a schematic view of an imaging apparatus 1 according to the invention. The imaging apparatus 1 comprises a first camera 2 and a second camera 3. These cameras 2, 3 are spaced apart from one another. Further, the imaging apparatus 1 comprises a first camera housing 4 and the second camera housing 5. The first camera 2 is arranged in an inner volume of the first camera housing 4 and the second camera 3 is arranged in an inner volume of the second camera housing 5. The camera housings 4, 5 can comprise transparent or semi-transparent sections through which radiation for imaging can pass. Further, the thermal isolation (not shown) can be arranged at or on the camera housings 4, 5, in particular on the outside surfaces of said housings 4, 5. The thermal isolation can e.g. be provided by foil elements. Further, the thermal insulation can also have transparent or semitransparent sections through which radiation for imaging can pass.

It is further possible that at least one lens element can be mounted to or integrated into the camera housings 4, 5 and/or the thermal insulation. This lens element can be configured for guiding radiation for imaging by the cameras 2, 3 in a desired way.

The first camera 2 and the first camera housing 4 provide a first camera unit. Correspondingly, the second camera 3 and the second camera housing 5 provide a second camera unit.

Further, the first camera unit comprises a device 6 for adjusting the temperature the first camera unit, in particular the first camera 2 and/or the inner volume of the first camera housing 4. The second camera unit also comprises a device 6 for adjusting the temperature of the second camera unit, in particular the second camera 3 and/or the inner volume of the second camera housing 5. A device 6 for adjusting the temperature can be provided by a cooling device or by a heating device. Preferably, the device 6 for adjusting the temperature is provided by a device by which the respective camera 2, 3 and/or the respective inner volume can be heated as well as cooled. The device 6 can also be arranged within the aforementioned inner volume of the camera housing 4, 5. Further, the device 6 can be mounted on the camera body.

Further, each camera unit comprises a temperature sensor 12, wherein the temperature sensor 12 is configured to sense the temperature of the respective camera 2, 3.

Both camera units are mounted to a support structure 7. In the embodiment shown in figure 1, the support structure 7 is provided by a pipe, wherein the camera units are mounted to the free ends of the pipe. It is possible that a camera housing 4, 5 comprises or has mounting means for mounting the housing 4, 5 to the support structure. The cameras 2, 3 are arranged stationary with respect to the respective camera housing 4, 5. Further, the housing 4, 5 can be mounted stationary with respect to the support structure 7 to set support structure 7. As a result, the cameras 2, 3 are arranged stationary with respect to one another point this means, that the relative position and a relative orientation between the two cameras 2, 3 is fixed.

Further, the imaging apparatus 1 comprises an apparatus housing 8. The camera units and the support structure 7 is arranged in an inner volume of the apparatus housing 8. The apparatus housings 8 can comprise transparent or semi-transparent sections through which radiation for imaging by the cameras 2, 3 can pass. Further, a thermal isolation (not shown) can be arranged at or on the apparatus housing 8, in particular on the outside surfaces of said housing 8. The thermal isolation can e.g. be provided by foil elements. Further, the thermal insulation can also have transparent or semitransparent sections through which radiation for imaging can pass. It is further possible that at least one lens element can be mounted to or integrated into the apparatus housing 1 and/or the thermal insulation of the apparatus housing 1. This lens element can be configured for guiding radiation for imaging by the cameras 2, 3 of the camera units in a desired way.

Further, the imaging apparatus 1 comprises two devices 9 for adjusting the temperature of the support structure 7. As outlined before, said temperature adjustment devices 9 can be provided by a cooling device or by a heating device or, preferably, by a combination thereof. Preferably, a temperature adjustment device 9 is provided by a device by which the support structure 7 can be heated as well as cooled.

The temperature adjustment devices 9 for adjusting the temperature of the support structure 7 are mounted on the support structure 7. In particular, a position and or orientation of the temperature adjustment device 9 relative to the support structure 7 is fixed. In particular, the temperature adjustment devices 9 are mounted to different portions of the support structure 7. More particular, the temperature adjustment devices 9 can be mounted such that a desired average temperature of the support structure 9 can be set by operating the temperature adjustment devices 9. The average temperature can denote a temperature which is averaged across the different sections or portions of the support structure 7.

Further, the imaging apparatus 1 comprises temperature sensors 10 for sensing a temperature of the support structure 7. In the embodiment shown in figure 1, two temperature sensors 10 are shown. The temperature sensors 10 are arranged such that the overall or average temperature of the support structure 7 can be reliably determined.

Further shown is that the imaging apparatus 1 comprises an evaluation and control unit 11. The evaluation and control unit 11 can comprise or be provided by a microcontroller or an integrated circuit. The evaluation and control unit 11 is connected to the temperature sensors 10 for sensing the temperature of the support structure 7 by signal or data connecting means, e.g. cable. Further, the evaluation and control unit 11 is connected to the temperature sensors 12 for sensing the temperature of the cameras 2, 3 by further signal or data connecting means.

The evaluation and control unit 11 is further connected to the temperature adjustment devices 6 for adjusting the temperature of the cameras 2, 3 and to the temperature adjustment devices 9 for adjusting the temperature of the support structure 7 by further signal or data connecting means. The evaluation and control unit 11 can control and operation of the temperature adjustment devices 6, 9 for adjusting the temperature of the cameras 2, 3 or the support structure 7. In particular, the temperature of the cameras 2, 3 can be controlled as a function of the temperature sensed by the temperature sensors 12. Further, the temperature of the support structure 7 can be controlled as a function of the temperature sensed by the temperature sensor 10.

It is possible that the temperature of the cameras 2, 3 is set to the desired set value by operating the temperature adjustment devices 6. In particular, the temperature of the cameras 2, 3 can be set to a constant value over time. In this case, the temperature adjustment devices 6 can be operated such that the difference between the set value and the temperature sensed by the temperature sensors 12 is minimized or zero.

It is further possible that the temperature of the support structure 7 is set to the desired set value by operating the temperature adjustment devices 9. In particular, the temperature of the support structure 7 can be set to a constant value over time. In this case, the temperature adjustment devices 9 can be operated such that the difference between the set value and the temperature sensed by the temperature sensors 10 is minimized or zero.

It is possible that the set value for the cameras 2, 3 is equal to the set value for the support structure 7. It is, alternatively, also possible that the set value for the cameras 2, 3 is different from the set value for the support structure 7. In other words, the temperature of the cameras 2, 3 and of the support structure 7 can be adjusted to different values.

So-called intrinsic parameters can be assigned to each cameras 2, 3. These intrinsic parameters can be determined by a calibration process which is known as so-called intrinsic calibration. Further, so-called extrinsic parameters can be assigned to the totality of the at least two cameras 2, 3, wherein these extrinsic parameters represent the relative position and orientation between the cameras 2, 3. These extrinsic parameters can also be determined by a calibration process which is known as so-called extrinsic calibration.

Based on the intrinsic parameters and extrinsic parameters, images generated by the cameras 2, 3 can be processed and evaluated, in particular for the image-based determination of features, in particular dimensional features, and/or for the image-based three-dimensional reconstruction. Both parameters are temperature-dependent. By controlling the temperature of the cameras 2, 3 to a desired set value, it is possible to simplify the determination of intrinsic parameters and/or to avoid new calibration of these intrinsic parameters. By controlling the temperature of the support structure 72 a desired set value, it is possible to simplify the determination of extrinsic parameters and/or to avoid a new calibration of these extrinsic parameters.

Further, the imaging apparatus 1, in particular the apparatus housing 8, can have at least one mounting interface for mounting the imaging apparatus 12 of the positioning device 13 (see figure 2).

Figure 2 shows a schematic block diagram of a positioning device 13 with an imaging apparatus 1. Further shown is a measurement object 14. The positioning device 13 can be used for adjusting the position and/or an orientation of the imaging apparatus 1 and thus of the cameras 2, 3. The position and/or orientation can be adjusted in a reference coordinate system. By way of example, such a reference coordinate system can comprise a vertical axis z which is oriented parallel but oppositely to the direction of a gravitational force. Further, the reference current system can comprise the longitudinal axis x and a lateral axis (not shown) which span a plane oriented perpendicular to the vertical axis z.

Images generated by the cameras 2, 3 of the imaging apparatus 1 from different position and/or with different orientations can be used to determine features of the measurement object 14, in particular dimensional features such as size -related features, distance-related features or other comparable features known to the skilled person. Further, the images can be used to construct a three-dimensional representation of the measurement object.

Figure 3 shows a schematic flow diagram of a method for operating an imaging apparatus 1 (see figure 1) according to the invention. In a first step S1, the temperature of the support structure 7 is sensed, e.g. by a temperature sensor 10. In a second step S2, the difference between the sensed temperature and a predetermined set value of the temperature is determined. In a third step S3, the temperature adjustment device 9 is operated such that the difference between the sensed temperature of the support structure 7 and the predetermined set value is reduced to zero or to a predetermined (small) value. Alternatively, it is possible that a temperature change of the sensed temperature is determined in the second step S2, wherein the temperature adjustment device 9 is operated such that the change is compensated, i.e. the support structure 7 is kept at a constant temperature.

Figure 4 shows a schematic flow diagram of a method for operating an imaging apparatus 1 (see figure 1) according to another embodiment of the invention. The first, the second and the third step S1, S2, S3 of the shown embodiment correspond to the first, the second and the third step S1, S2, S3 shown in figure 3. Thus, it can be referred to the description of said steps as outlined above. In a fourth step S4, the temperature of each cameras 2, 3 is sensed, e.g. by a temperature sensor 12. In a fifth step S5, the difference between the sensed temperature and a predetermined set value of the temperature is determined. In a sixth step S6, the temperature adjustment device 6 is operated such that the difference between the sensed temperature of a camera 2, 3 and the predetermined set value is reduced to zero or to a predetermined (small) value. Alternatively, it is possible that a temperature change of the sensed temperature is determined in the fifth step S5, wherein the temperature adjustment device 6 is operated such that the change is compensated, i.e. the camera 2, 3 is kept at a constant temperature.

The sequence of the first, second and third step S1, S2, S3 and the sequence of the fourth, the fifth and the six step S4, S5, S6 can be performed sequentially or in parallel.

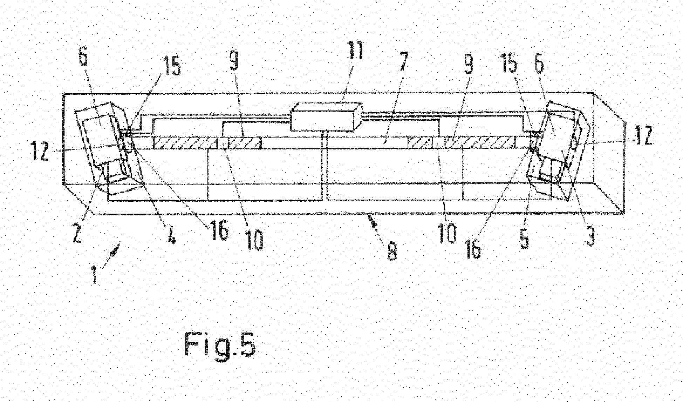

Figure 5 discloses a schematic view of an imaging apparatus 1 according to another embodiment of the invention. The embodiment shown in Fig. 5 is essentially similar to the embodiment shown in Fig. 1. Thus, reference is made to the corresponding description. In contrast to the embodiment shown in Fig. 1, the imaging apparatus 1 shown in Fig. 5 comprises devices 15 for adjusting the temperature of the mounting means 16. By mounting means 16, an imaging device, in particular its housing 4, is mounted to the support structure 7, in particular with a rigid connection. Mounting means 16 are schematically shown by blocks. Devices 15 for adjusting the temperature of said mounting means 16 are also schematically shown by blocks. Such a device 15 can e.g. be provided by a device 6 for adjusting the temperature of the image device connected to the support structure 7 by the respective mounting means 16 and/or by a device 9 for adjusting the temperature of the support structure 7 connected to the imaging device by the respective mounting means 16.

Alternatively, such devices 15, 6, 9 can be designed as separate devices. Not shown is a temperature sensor for sensing the temperature of a mounting means.

As described with reference to Fig. 1, the evaluation and control unit 11 is connected to the temperature sensors 10, 12 and to the devices 15, 6, 9 for adjusting the temperature to control the operation of said devices 15, 6, 9.

Further to the operation outlined with respect to the embodiment shown in Fig. 1, it is possible that the temperature of the mounting means 16 is set to the desired set value by operating the temperature adjustment devices 15. In particular, said temperature can be set to a constant value over time. In this case, the temperature adjustment devices 15 can be operated such that the difference between the set value and the temperature sensed by the mounting means temperature sensors is minimized or zero.

It is possible that the set value for the mounting means is equal to the set value for the support structure. It is, alternatively, also possible that the set value for the mounting means 16 is different from the set value for the support structure 7.

## Claims

1. An imaging apparatus (1) for measuring of an object (14), wherein the imaging apparatus (1) comprises at least two imaging devices, a support structure (7) and an apparatus housing (8), wherein the imaging devices are mounted to the support structure (7) by at least one mounting means, wherein the support structure (7) with the imaging devices is arranged within an inner volume of the apparatus housing (8), **characterized in that**
the imaging apparatus (1) further comprises at least one device (9) for adjusting the temperature of the support structure (7) and/or at least one device (15) for adjusting the temperature of the mounting means (16).

2. The imaging apparatus according to claim 1, **characterized in that** the at least one device (9) for adjusting the temperature of the support structure (7) is mounted on the support structure (7) and/or the at least one device (15) for adjusting the temperature of the mounting means (16) is mounted on the imaging device and/or on the support structure (7) and/or on the mounting means (16).

3. The imaging apparatus according to one of the preceding claims, **characterized in that** the device (9) for adjusting the temperature of the support structure (7) is thermally connected to the support structure (7) by a thermal connection with a thermal conductivity higher than the thermal conductivity of air and/or the device (15) for adjusting the temperature of the mounting means (16) is thermally connected to the mounting means (16) by a thermal connection with a thermal conductivity higher than the thermal conductivity of air.

4. The imaging apparatus according to one of the preceding claims, **characterized in that** the imaging apparatus (1) further comprises at least one temperature sensor (10) for sensing the temperature of the support structure (7) and/or at least one temperature sensor for sensing the temperature of the mounting means (16).

5. The imaging apparatus according to claim 4, **characterized in that** the temperature sensor (10) is mounted on the support structure (7) and/or on the mounting means (16).

6. The imaging apparatus according to claim 4 or 5, **characterized in that** the temperature sensor (10) is thermally connected to the support structure (7) and/or to the mounting means (16) by a thermal connection with a thermal conductivity higher than the thermal conductivity of air.

7. The imaging apparatus according to one of the preceding claims, **characterized in that** the imaging device comprises an imaging device housing (4, 5) and an image capturing unit (2, 3), wherein the image capturing unit (2, 3) is arranged within an inner volume of the imaging device housing (4, 5), wherein the imaging device further comprises at least one device (6) for adjusting the temperature of the imaging device.

8. The imaging apparatus according to claim 7, **characterized in that** the imaging device further comprises at least one temperature sensor (12) for sensing the temperature of the imaging device (2, 3).

9. The imaging apparatus according to one of the preceding claims, **characterized in that** the imaging apparatus (1) comprises at least one control unit (11) for controlling an operation of the at least one device (9) for adjusting the temperature of the support structure (7) and/or for controlling an operation of the at least one device (15) for adjusting the temperature of the mounting means (16) and/or for controlling an operation of the at least one device (6) for adjusting the temperature of the imaging device.

10. The imaging apparatus according to one of the preceding claims, **characterized in that** the support structure (7) comprises an elongated element, wherein the imaging devices are mounted on the free ends of the elongated element.

11. The imaging apparatus according to one of the preceding claims, **characterized in that** the imaging apparatus (1) comprises at least one thermal insulation element for isolating the inner volume of the apparatus housing (8).

12. The imaging apparatus according to one of the preceding claims, **characterized in that** the imaging apparatus (1) has at least one mounting interface for mounting the apparatus to a positioning device (13).

13. A method for operating an imaging apparatus (1) according to one of the claims 1 to 12, wherein the at least one device (9) for adjusting the temperature of the support structure (7) is operated such that the temperature of the support structure (7) is adjusted to a predetermined value and/or wherein the at least one device (15) for adjusting the temperature of the mounting means (16) is operated such that the temperature of the mounting means (16) is adjusted to a predetermined value.

14. The method according to claim 13, **characterized in that** the at least one device (9) for adjusting the temperature of the support structure (7) is operated such that the temperature of the support structure (7) remains constant and/or that the at least one device (15) for adjusting the temperature of the mounting means (16) is operated such that the temperature of the mounting means (16) remains constant.

15. The method according to claim 13 or 14, **characterized in that** the devices (9, 6, 15) for adjusting the temperature are operated such that the temperature of the support structure (7) and/or the temperature of the mounting means (16) and/or the temperature of the imaging device are adjusted to an equal value or to different values.

## Amended claims

### Amended claims in accordance with Rule 137(2) EPC.

1. An imaging apparatus (1) for determining dimensional features of an object (14), wherein the imaging apparatus (1) comprises at least two imaging devices and an apparatus housing (8),
**characterized in that**
the imaging apparatus (1) comprises a support structure (7) wherein the imaging devices are mounted to the support structure (7) by at least one mounting means, wherein the support structure (7) with the imaging devices is arranged within an inner volume of the apparatus housing (8), wherein the imaging apparatus (1) further comprises at least one device (9) for adjusting the temperature of the support structure (7) and/or at least one device (15) for adjusting the temperature of the mounting means (16).

2. The imaging apparatus according to claim 1, **characterized in that** the at least one device (9) for adjusting the temperature of the support structure (7) is mounted on the support structure (7) and/or the at least one device (15) for adjusting the temperature of the mounting means (16) is mounted on the imaging device and/or on the support structure (7) and/or on the mounting means (16).

3. The imaging apparatus according to one of the preceding claims, **characterized in that** the device (9) for adjusting the temperature of the support structure (7) is thermally connected to the support structure (7) by a thermal connection with a thermal conductivity higher than the thermal conductivity of air and/or the device (15) for adjusting the temperature of the mounting means (16) is thermally connected to the mounting means (16) by a thermal connection with a thermal conductivity higher than the thermal conductivity of air.

4. The imaging apparatus according to one of the preceding claims, **characterized in that** the imaging apparatus (1) further comprises at least one temperature sensor (10) for sensing the temperature of the support structure (7) and/or at least one temperature sensor for sensing the temperature of the mounting means (16).

5. The imaging apparatus according to claim 4, **characterized in that** the temperature sensor (10) is mounted on the support structure (7) and/or on the mounting means (16).

6. The imaging apparatus according to claim 4 or 5, **characterized in that** the temperature sensor (10) is thermally connected to the support structure (7) and/or to the mounting means (16) by a thermal connection with a thermal conductivity higher than the thermal conductivity of air.

7. The imaging apparatus according to one of the preceding claims, **characterized in that** the imaging device comprises an imaging device housing (4, 5) and an image capturing unit (2, 3), wherein the image capturing unit (2, 3) is arranged within an inner volume of the imaging device housing (4, 5), wherein the imaging device further comprises at least one device (6) for adjusting the temperature of the imaging device.

8. The imaging apparatus according to claim 7, **characterized in that** the imaging device further comprises at least one temperature sensor (12) for sensing the temperature of the imaging device (2, 3).

9. The imaging apparatus according to one of the preceding claims, **characterized in that** the imaging apparatus (1) comprises at least one control unit (11) for controlling an operation of the at least one device (9) for adjusting the temperature of the support structure (7) and/or for controlling an operation of the at least one device (15) for adjusting the temperature of the mounting means (16) and/or for controlling an operation of the at least one device (6) for adjusting the temperature of the imaging device.

10. The imaging apparatus according to one of the preceding claims, **characterized in that** the support structure (7) comprises an elongated element, wherein the imaging devices are mounted on the free ends of the elongated element.

11. The imaging apparatus according to one of the preceding claims, **characterized in that** the imaging apparatus (1) comprises at least one thermal insulation element for isolating the inner volume of the apparatus housing (8).

12. The imaging apparatus according to one of the preceding claims, **characterized in that** the imaging apparatus (1) has at least one mounting interface for mounting the apparatus to a positioning device (13).

13. A method for operating an imaging apparatus (1) according to one of the claims 1 to 12, wherein the at least one device (9) for adjusting the temperature of the support structure (7) is operated such that the temperature of the support structure (7) is adjusted to a predetermined value and/or wherein the at least one device (15) for adjusting the temperature of the mounting means (16) is operated such that the temperature of the mounting means (16) is adjusted to a predetermined value.

14. The method according to claim 13, **characterized in that** the at least one device (9) for adjusting the temperature of the support structure (7) is operated such that the temperature of the support structure (7) remains constant and/or that the at least one device (15) for adjusting the temperature of the mounting means (16) is operated such that the temperature of the mounting means (16) remains constant.

15. The method according to claim 13 or 14, **characterized in that** the devices (9, 6, 15) for adjusting the temperature are operated such that the temperature of the support structure (7) and/or the temperature of the mounting means (16) and/or the temperature of the imaging device are adjusted to an equal value or to different values.
